# EUROPÄISCHE PATENTSCHRIFT

(11) **EP 4 680 866 B1**
(45) Veröffentlichungstag und Bekanntmachung des Hinweises auf die Patenterteilung: **13.05.2026**
(21) Anmeldenummer: 24710387.2
(22) Anmeldetag: 07.03.2024
(51) Int. Cl.: F16B 37/08

(54) **MUTTER**
NUT
ÉCROU

(30) Priorität: 15.03.2023 DE 202023101283 U; 22.03.2023 DE 202023101439 U
(43) Veröffentlichungstag der Anmeldung: 21.01.2026
(73) Patentinhaber: Giehl, Arno, 50996 Köln (DE)
(72) Erfinder: Giehl, Arno, 50996 Köln (DE)
(74) Vertreter: KBN IP Patentanwälte Partnerschaft mbB
(86) Internationale Anmeldenummer: PCT/EP2024/056018
(87) Internationale Veröffentlichungsnummer: WO 2024/188805

(56) Entgegenhaltungen:
- CN-U- 205 001 344
- CN-U- 213 176 410
- GB-A- 736 008
- US-A1- 2002 159 830

## Beschreibung

### Gebiet der Technik

Klassische Muttern müssen auf einen Gewindebolzen aufgeschraubt und nach Erreichen des Anschlags festgezogen werden. Um bei längeren Gewindebolzen ein vielfaches Drehen der Mutter zu vermeiden oder um die Mutter ohne Abschrauben vom Gewindebolzen leichter lösen zu können, wurden spezielle Muttern entwickelt, die auf dem Bolzen verschiebbar sind und bei Erreichen der gewünschten Position in Eingriff mit dem Gewinde gebracht werden können.

### Stand der Technik

Eine gattungsgemäße Mutter ist aus der CN 213 176 410 U bekannt. Die dort offenbarte Mutter dient zum Aufschrauben auf einen Gewindebolzen in einer axialen Anziehrichtung mit
- einem jeweils relativ zur Anziehrichtung vorderen Abschnitt und einem hinteren Abschnitt,
- einem Spannkörper mit einer zumindest einseitig offenen Segmentaufnahme,
- ersten Führungsmitteln mit radial nach innenragenden Führungsstiften,
- einer in der Segmentaufnahme zumindest in Anziehrichtung hin- und her beweglichen Gewindeeinheit (2) , die zumindest zwei Gewindesegmente mit gebogenen, Gewindegangabschnitte aufweisenden Innenseiten aufweist.

Die Gewindesegmente der bekannten Mutter sind zu einem segmentierten Innengewinde mit aneinander angrenzenden oder zueinander beabstandeten Gewindesegmenten zusammenstellbar, wobei an der Gewindeeinheit zweite Führungsmittel vorgesehen sind, die derart mit den ersten Führungsmitteln zusammenwirken, dass die Gewindesegmente in der Segmentaufnahme geführt sind und bei Bewegen des Spannkörpers relativ zur Gewindeeinheit in Anziehrichtung die gebogenen Innenseiten derart aufeinander zubewegt sind, dass die Gewindegangabschnitte das segmentierte Innengewinde bilden. Die Gewindesegmente weisen beidseitig längs der Anziehrichtung verlaufende Seitenflächen auf und die Führungsstifte ragen in Spalte zwischen gegenüberliegende Seitenflächen, wobei zumindest eine der Seitenflächen derart konturiert ist, dass die Seitenflächen im vorderen Abschnitt der Mutter einen Anschlag für die Führungsstifte bilden.

Eine ähnliche Mutter ist aus der WO 01/88390 A1 bekannt. Auch diese Mutter dient zum Aufschieben über einen Weg eines Gewindebolzens in einer axialen Anziehrichtung, zunächst noch ohne Gewindeeingriff, wobei nach Erreichen der Fläche, an der sich die Mutter nach dem Anziehen abstützen wird, die Mutter in einen Zustand mit Gewindeeingriff verbracht wird und anschließend wie eine konventionelle Mutter angezogen werden kann. Segmentierte Muttern sind ferner aus der CN 205 001 344 U, der GB 558 302 A und der US 5 826 847 A1 bekannt.

Ein Vorteil der bekannten Muttern, insbesondere der aus der WO 01/88390 A1 bekannten Mutter, besteht darin, dass durch das Schieben über das Außengewinde des Gewindebolzens zunächst ohne Gewindeeingriff Zeit und Mühe für das Verbringen der Mutter in die Nähe der späteren Halteposition eingespart werden kann und erst dann das Innengewinde der Mutter zum Verbringen der Mutter in den Zustand mit Gewindeeingriff verengt wird, so dass dieses in Eingriff mit dem Außengewinde gelangt und anschließend die Mutter, wie die konventionelle Mutter, angezogen werden kann. Hierdurch können zum Beispiel zum Anziehen der Mutter mit dem gewünschten Anzugsmoment nur eine oder einige wenige Umdrehungen notwendig sein, während bei einer konventionellen Mutter eine Vielzahl von Umdrehungen notwendig war, um die Mutter drehend längs eines langen Gewindebolzens zu bewegen, nur um sie in die Nähe der späteren Fixierposition zu verbringen.

Ein weiterer Vorteil der aus der WO 01/88390 A1 bekannten Mutter besteht darin, dass sie sich oft noch lösen lässt, während klassische Muttern nach längerem Verbleib festgerostet und kaum noch lösbar sind.

Zur Umsetzung der oben genannten Funktionen weist auch diese Mutter einen relativ zur Anziehrichtung vorderen Abschnitt und einen hinteren Abschnitt, sowie einen äußeren Spannkörper mit einer zumindest einseitig offenen, axialen Segmentaufnahme, ersten Führungsmitteln und radial nach innen ragenden Führungsstiften auf. Bei der bekannten Mutter ist die Segmentaufnahme als Durchgangsöffnung ausgebildet, in der eine Gewindeeinheit wenigstens in Anziehrichtung verlagerbar, insbesondere verschiebbar, gehalten ist.

Die Gewindeeinheit weist ein erstes Gewindesegment und zumindest ein zweites Gewindesegment auf, wobei das erste Gewindesegment und das zweite Gewindesegment wiederum eine gebogene Innenseite mit Abschnitten von Gewindegängen aufweisen und zu einem segmentierten Innengewinde zusammensetzbar ist. Natürlich kann die Gewindeeinheit auch drei oder mehr Gewindesegmente aufweisen. "Zusammensetzen" bedeutet in diesem Zusammenhang das Positionieren der Gewindesegmente so, dass sich eine Gewindekonfiguration ergibt, wobei es hierzu nicht notwendig ist, dass die einzelnen Gewindesegmente mit einer in Kontakt stehen oder gar miteinander verbunden sind. Es soll ausreichen, wenn die Gewindesegmente so zueinander angeordnet und einzeln oder gemeinsam gehalten sind, dass sich eine in der Regel an den Rändern der Gewindesegmente unterbrochener, gewendelter Gewindegang ergibt, der mit dem Außengewinde nach der Art einer Schrauben-/Mutterverbindung korrespondiert.

Die Gewindesegmente werden von einer insbesondere in ihrem hinteren Bereich vorgesehen Spreizfeder auseinandergedrückt. An der von den Gewindesegmenten und der Spreizfeder gebildeten Gewindeeinheit sind zweite Führungsmittel vorgesehen, die derart mit den ersten Führungsmitteln zusammenwirken, dass das erste Gewindesegment und das zweite Gewindesegment in der Segmentaufnahme geführt sind. Ferner wird hierdurch bewirkt, dass bei Aufschieben des Spannkörpers auf die Gewindeeinheit in eine Schließstellung die gebogenen Innenseiten der Gewindesegmente derart in Richtung der Mittelachse der Mutter und aufeinander zubewegt sind, dass die Abschnitte von Gewindegängen das Innengewinde bilden, also zwar nicht notwendigerweise durchgängige Gewindegänge bilden, aber so angeordnet sind, dass sie wie ein Gewinde wirken. Die übrigen Bereiche der Gewindesegmente sind dabei so ausgebildet, dass sie räumlich zurückspringen und das Einschrauben eines Außengewindes in das Innengewinde nicht stören oder gar blockieren.

Das erste Gewindesegment und das zweite Gewindesegment weisen bei einer bevorzugten Ausgestaltung längs der Anziehrichtung verlaufende Seitenflächen auf. Dies sind die seitlichen Stirnflächen der zum Beispiel als Halbschalen ausgebildeten Gewindesegmente, die jeweils einander zugewandt sind. Die Führungsstifte können beispielsweise in Spalte zwischen zwei gegenüberliegenden Seitenflächen hineinragen, wobei vorteilhafterweise zumindest eine der Seitenflächen derart konturiert ist, dass die Seitenflächen im vorderen Abschnitt einen Anschlag für die Führungsstifte bilden, sich der Spalt also soweit verjüngt, dass die Führungsstifte an der Verengung anschlagen.

Die aus der WO 01/88390 A1 bekannte Mutter funktioniert sehr gut. Sie erlaubt das Aufschieben des Verbundes aus Spannkörper und darin in Lösestellung gehaltener Gewindeeinheit auf einen Gewindebolzen, das anschließende Drücken des Spannkörpers auf die Gewindeeinheit unter Abstützung der Gewindeeinheit an der Widerlagerfläche, an der die Mutter zum Einsatz kommt, mit dem Schließen des Innengewindes und das finale Anziehen der Mutter mittels eines üblichen Schlüssels.

Ein Nachteil der bekannten Muttern besteht darin, dass insbesondere bei größeren Nenndurchmessern und damit schweren Muttern das Aufschieben auf einen Gewindebolzen durch das Verhaken der Gewindegangabschnitte der Gewindesegmente mit dem Außengewinde des Gewindebolzens erschwert ist. Zusätzlich kann im Falle eines unbeabsichtigten Verhakens der geöffneten Mutter mit dem Außengewinde der Führungsstift abrupt gegen die untere Feder anschlagen, so dass das Risiko einer Beschädigung der Feder entstehen kann.

### Technische Aufgabe

Aufgabe der Erfindung ist es, ausgehend von der gattungsgemäßen Mutter eine verbesserte Mutter zu schaffen, die einen erhöhten Komfort beim Aufschieben der sich in Lösestellung befindlichen Mutter auf den Gewindebolzen bei reduzierter Gefahr der Beschädigung von Gewindeabschnitten bietet. Eine weitere Aufgabe der Erfindung besteht darin, die Mutter dahingehend weiterzubilden, dass sie eine erhöhte Sicherheit gegen unbeabsichtigte Beschädigung und unbeabsichtigtes Zerfallen aufweist.

### Technische Lösung

Diese Aufgabe, insbesondere die erstgenannte Aufgabe, wird nach der Erfindung durch eine Mutter nach Anspruch 1 gelöst.

Die neue Mutter ist insbesondere dadurch gekennzeichnet, dass die Gewindesegmente zwischen den Gewindesegmenten und den Seitenflächen zumindest auf einer Seite der Mutter gewindegangfreie, glatte Ausnehmungen als Bolzenauflage aufweisen, die sich über die vom vorderen Abschnitt zum hinteren Abschnitt gesehen vollständige Länge der Gewindesegmente erstrecken, wobei die Oberfläche der Gewindesegmente im Bereich der Ausnehmungen so ausgebildet ist, dass die Ausnehmungen in radialer Richtung vollständig außerhalb einer zylindrischen Hüllfläche liegen, die die äußeren Bereiche der Gewindegangabschnitte des Innengewindes umhüllt.

In diesem Dokument wird der Bereich der Mutter, der beim bestimmungsgemäßen Anziehen der Mutter der Fläche zugewandt ist, gegen die sich die Mutter dann abstützt, als "vorderer Bereich" bezeichnet. Der gegenüberliegende Bereich wird dann als "hinterer Bereich" bezeichnet. "Anziehrichtung" ist die Richtung, in die die Mutter beim Festdrehen längs eines Gewindebolzens bewegt wird. Mit Bereich ist dabei nicht nur die jeweilige Stirnfläche oder Stirnseite der Mutter gemeint, der ein Abschnitt der Mutter, der sich von der vorderen oder hinteren Stirnseite um bis zu 30%, bevorzugt bis zu 20% der Gesamtlänge in Anziehrichtung von der Stirnseite wegerstreckt.

### Vorteilhafte Wirkungen

Durch die Neuerungen wird es nun möglich, dass die geöffnete Mutter wesentlich einfacher über den Gewindebolzen geschoben werden kann. Durch die Ausnehmungen ergibt sich eine glatte Fläche bzw. eine linienartige Anlage der voneinander beabstandeten Gewindesegmente an dem Außengewinde des Gewindebolzens. Hierdurch wird verhindert, dass sich frühzeitig die Gewindegangabschnitte der Gewindesegmente mit dem Außengewinde verhaken. Und es wird eine definierte Gleitmöglichkeit geschaffen, auf der die auf dem Außengewinde liegende Mutter in Richtung der Halteposition ohne Beschädigungsrisiko geschoben werden kann.

Die hier genannten Muttern können grundsätzlich in allen Größen hergestellt werden, insbesondere natürlich in den Normgrößen nach **DIN** 934 bzw. ISO 4032. Die Muttern können aus Stahl, Edelstahl, Aluminium, Kupfer, Messing oder auch Kunst-stoff bestehen. Auch eine Materialmischung ist natürlich möglich, so können zum Bei-spiel die Gewindesegmente aus Stahl oder Edelstahl gefertigt werden, während der Spannkörper aus einem anderen Material gefertigt sein kann, beispielsweise Alumini-um, Messing oder Kunststoff. Dabei können auch sehr große Gewindedurchmesser, beispielsweise M100 oder noch sehr viel größer, verwendet werden. Sofern die Muttern beispielsweise aus Stahl oder Edelstahl gefertigt werden, haben sie bei größeren Gewindedurchmessern ein vergleichsweise hohes Gewicht, so dass insbesondere das Aufschieben auf horizontale Gewindestangen schwierig wird, da hierzu die Mutter so abgestützt werden muss, dass die oberen Teile der Gewindegangabschnitte nicht in die Gewindegänge des Außengewindes eingreifen.

Im Falle von Kunststoffmuttern ist zwar das Anheben der Muttern aufgrund des geringeren Gewichtes leichter, dafür besteht aber ein höheres Risiko, dass bei unbeabsichtigtem Eingriff der Gewindegangabschnitte in die Gewindegänge des Außengewindes die Gewindegangabschnitte deformiert werden, was insbesondere dann passieren kann, wenn das Außengewinde aus Stahl oder Edelstahl besteht und die Mutter aus Kunststoff gefertigt ist.

Die Ausnehmungen sind nun so gestaltet, dass bei Stellung der Gewindesegmente in Lösestellung, wenn also die Gewindeeinheit aus dem Spannkörper herausgeschoben ist, im Randbereich der Gewindesegmente, angrenzend an die Spalte zwischen den Seitenflächen der Gewindesegmente, eine glatte Auflagefläche oder zumindest eine linienartige Schiene gebildet ist, auf der das Außengewinde ab-gleiten kann. Umgekehrt ausgedrückt, liegen die auseinandergedrückten Gewindesegmente mit ihren oberen, nun glatten Randbereichen auf dem Außengewinde auf und können so leicht verschoben werden. Die von oben gesehen konvexe Ausgestaltung des zylindrischen Außengewindes hält dabei die Gewindesegmente auseinander.

Um eine Beschädigung durch den vorderen Rand der Gewindesegmente ebenfalls zu vermeiden, ist der vordere Bereich der Ausnehmungen bevorzugt angefast bzw. mit kegelsegmentartig nach vorne und außen geneigter Fläche oder auch mit nach außen gerundeter Fläche abgeschrägt. Die Ausnehmungen, die zusammen die Bolzenauflage bilden, weisen bevorzugt, aber nicht notwendigerweise, eine aus Sicht der durch die Anziehrichtung verlaufenden Mittelachse konkav gekrümmte Oberfläche auf.

Im Falle einer weiteren, bevorzugten Ausgestaltung der Mutter weist die Oberfläche der Ausnehmungen einen Krümmungsradius auf, der zumindest so groß, bevorzugt aber größer ist als der Krümmungsradius des Gewindedurchmessers, also des Nenn-durchmessers der Mutter, ist. Hierdurch ergibt sich eine asymptotische Anlage an das Außengewinde des Gewindebolzens. In allen Fällen muss die Oberfläche der Ausnehmungen so weit nach außen springen, dass die sich aus Sicht der Seitenflächen hinter den Ausnehmungen anschließenden Gewindegangabschnitte bei auseinandergedrückten Gewindesegmenten nicht in Kontakt mit den inneren Bereichen der Gewindegänge des Außengewindes kommen. Dies bedeutet, dass ein leichtes Hineinragen der Gewindegangabschnitte in den Bereich der Ausnehmungen so lange unproblematisch ist, wie genügend Fläche zur Verfügung steht, die zumindest zwei hintereinander angeordnete Gewindegangabschnitte überlappt.

Der Krümmungsradius der Oberfläche kann aber bei einer alternativen Ausgestaltung der Erfindung auch kleiner als der Krümmungsradius eines Bolzens mit dem Nenn-durchmesser der Mutter sein. In diesem Fall ergibt sich am Rand der Ausnehmung eine parallel zur Anziehrichtung verlaufende Übergangskante im Übergangsbereich von Ausnehmung zur zylindrisch gerundeten Innenfläche des übrigen Bereiches der Innenseite der Gewindesegmente. Diese Übergangskante kann dann wie eine Gleit-schiene auf dem Außengewinde abgleiten. Eine solche Ausgestaltung wird sich insbesondere bei leichteren Muttern mit kleinerem Gewindedurchmesser anbieten, bei der es weniger auf das leichtere Handling infolge des Gewichtes ankommt als auf das komfortable Schieben über das Gewinde.

Die Ausnehmungen können auch eine ganz andere Form aufweisen. In diesem Fall ist es zweckmäßig, wenn die Oberflächen der Ausnehmungen parallel zur Anziehrichtung verlaufende, schienenartige Vorsprünge als Gleitflächen zum Schieben der geöffneten Mutter über das Außengewinde des Gewindebolzens besitzen. Hier ist es ausreichend, wenn auf jeder Seite der Gewindesegmente, also in jeder Ausnehmung oder an deren seitlichen Randbereichen, eine einzige Gleitfläche vorgesehen ist. Die Ausnehmungen können schon bei der Herstellung der Gesindesegmente durch Umformen hergestellt werden oder nach der Herstellung des Segmentkörpers eingefräst werden. Letztlich wird die von der Größe der Mutter und insbesondere von der herzustellenden Stück-zahl abhängen.

Wenn das von der Gleitfläche zu tragende Gewicht durch die Größe der Mutter oder deren Material größer ist, können natürlich auch mehrere, insbesondere parallel zu einander und bevorzugt auch parallel zur Anziehrichtung verlaufende Gleitflächen vor-gesehen sein. Da die Gleitflächen allerdings in allen Fällen nur die Funktion besitzen, einen unbeabsichtigten Eingriff in das Außengewinde zu verhindern, können sie natürlich auch gewendelt sein, insbesondere gegensinnig zum Außengewinde.

Die Gewindesegmente können schließlich im vorderen Bereich, zusätzlich oder alter-nativ, auch im hinteren Bereich einen umlaufenden, radial nach außen hervorspringenden Absatz aufweisen, der derart ausgebildet ist, dass sich nach Aufschrauben der zusammengesetzten Mutter zwischen diesem Absatz und dem Außengewinde des Gewindebolzens eine umlaufende oder auch unterbrochene Ringnut ergibt. Diese Vertiefung kann genutzt werden, um - zusätzlich zur Möglichkeit, einen Hebel in den Spalt zwischen den Seitenflächen der Gewindesegmente anzusetzen - zum Lösen der Mutter die Gewindesegmente von dem Bolzen abhebeln zu können. Im vorderen Bereich der Mutter reduziert die Ringnut die Auflagefläche der Mutter an der Fläche, gegen die sie angezogen wird, so dass der vordere Bereich elastischer ausgestaltet werden kann, was wiederum einen Schutz gegen unbeabsichtigtes Lösen der Mutter mit sich bringen kann.

Ein weiterer Aspekt der Erfindung besteht darin, dass die Mutter eine erhöhte Sicherheit gegen Auseinanderfallen und einen verbesserten Schutz vor Beschädigungen aufweist. Dies erreicht eine abhängig von den zuvor beschriebenen Merkmalen verbesserte Mutter dadurch, dass zumindest eine der Seitenflächen derart konturiert ist, dass gegenüberliegende Seitenflächen im hinteren Bereich, aus Sicht der Führungsstifte vor der Spreizfeder, die lichte Breite des Spalts, in dem die Führungsstifte verschiebbar sind, so weit unter den Durchmesser der Führungsstifte verengen, dass dies einen Sicherungsanschlag für die Führungsstifte bildet.

Durch die hinsichtlich des Sicherungsanschlags realisierte Weiterbildung der Mutter wird nun ein zusätzlicher Anschlag vorgesehen, der sich im hinteren Bereich der zusammengeschobenen Mutter befindet. In diesem hinteren Bereich, jedoch auch hinter dem zusätzlichen Anschlag, sind die Spreizmittel in Form einer Spreizfeder bzw. mehrerer Spreizfedern vorgesehen. Die Spreizmittel haben die Aufgabe, die Gewindesegmente auseinander zu drücken, wenn sich der Spannkörper in Öffnungsstellung befindet. Dies öffnet nicht nur die Durchgangsöffnung für den Gewindebolzen, sondern hält die Teile der Mutter auch effektiv zusammen, ohne dass zusätzliche Nut-/Federverbindungen notwendig sind.

So wird bei einer bevorzugten Ausgestaltung der Mutter die Gewindeeinheit durch die Federkraft der Spreizfeder nicht nur radial nach außen gedrückt, sondern schnellen auch längs des Gewindebolzens bzw. der Mittelachse der Mutter nach vorne. Diese Längsbewegung resultiert aus der Führung der Gewindesegmente an der Innenseite des Spannkörpers über schiefe Ebenen, so dass die Spreizkraft der Spreizfeder in eine radiale und eine axiale Komponente aufgeteilt wird. Beim Lösen des Spannkörpers, unabhängig ob die Mutter auf den Gewindebolzen aufgeschraubt ist oder nicht, schnellen die Gewindesegmente zusammen mit der darin gehaltenen Spreizfeder relativ zum Spannkörper dann nach vorne, wobei bei den bekannten Muttern die hier-durch bewegte Spreizfeder gegen die Führungsstifte anschlagen kann. Die verhindert nun die Konturierung der Seitenflächen mit der damit einhergehenden Bildung des Anschlags.

In der Öffnungsstellung ragen die im Spannkörper geführten Gewindesegmente der Gewindeeinheit vorne aus dem Spannkörper heraus. Da Spannkörper und Gewinde-einheit über geeignete Führungsmittel, beispielsweise sich konisch nach vorne erweiternde Kontakt- oder Führungsflächen, einen radialen Bewegungsspielraum bei Verlagern des Spannkörpers von der Schließstellung in die Öffnungsstellung ermöglichen, können die Gewindesegmente von den Spreizmitteln auseinandergedrückt werden, so dass das Innengewinde der Mutter mit dem Außengewinde des Bolzens außer Eingriff kommt.

Umgekehrt bewirkt ein Aufschieben des bei einer bevorzugten Ausgestaltung ringförmigen, mit einer Sechskantkontur zum Ansetzen eines Ring- oder Maulschlüssels versehen Spannkörpers das Drücken der Gewindesegmente nach innen, so dass sich hierdurch ein segmentiertes Gewinde ergibt, das dann mit dem Außengewinde in Ein-griff steht. Die Spreizmittel sind üblicherweise Federmittel. Dies können in den Seiten-flächen der Gewindesegmente vorgesehene Druckfedern oder auch eine Ringfeder im hinteren Bereich der Mutter sein.

Der zusätzliche Anschlag schützt nun im Falle einer als Ringfeder ausgebildeten Spreizfeder diese Spreizfeder, die bisher den Anschlag bildete. Üblicherweise schiebt der Benutzer die Mutter in der Lösestellung des Spannkörpers über den Gewindebolzen, bis sie an der Fläche, an der sie sich später nach Anziehen abstützen soll, an-schlägt. Dann wird der Spannkörper weiter in Richtung dieser Fläche verlagert, bis die Gewindesegmente ruckartig nach innen gedrückt werden und die Führungsstifte am Anschlag anliegen. Hierbei verbleibt zwischen dem Spannkörper und der Fläche, gegen die sich die Mutter abstützt, ein Spalt, da ja sichergestellt sein muss, dass die die Mutter gegen Lösen sichernde Reibkraft zwischen dieser Fläche und der Gewindeeinheit auch tatsächlich definiert aufgebaut werden kann.

Da der Spannkörper auch bei angezogener Mutter axial beweglich bleibt, kann dieser nicht genutzt werden, um die Mutter über eine Reibkraft zu fixieren. Darüber hinaus ist ein Spalt zwischen dem Spannkörper und der Fläche, gegen die sich die Mutter ab-stützt, oft auch gewünscht, da dieser genutzt werden kann, um bei festsitzender, zum Beispiel infolge von Rost nicht mehr lösbarer Mutter, ein Lösen der Mutter zu verein-fachen. In diesem Fall kann der Spannkörper über einen Schraubendreher oder einen Keil in Richtung des hinteren Bereichs der Mutter und von den vorderen Bereichen der Gewindesegmente weggedrückt werden, so dass die Gewindesegmente und der Spalt zwischen den Seitenflächen teilweise freigelegt werden und die Gewindesegmente radial von dem Bolzen gelöst werden können.

Der zusätzliche Anschlag schützt eine ringförmige Spreizfeder davor, dass sie beim Lösen des Spannkörpers, also in der Öffnungsstellung der Mutter, beschädigt wird. Darüber hinaus kann es passieren, dass die Spreizfeder vorher bereits beschädigt war, so dass sich über die konturierte Seitenfläche auch ganz ohne Spreizfeder ein Anschlag ergibt. Schließlich ist es natürlich auch möglich, Federmittel zu verwenden, die ausschließlich zwischen den Seitenflächen angeordnet sind, aber im Gegensatz zu einer Ringfeder nicht umlaufend sind. Solche Federmittel sind üblicherweise kleine Schraubenfedern, die in Sacklöchern in der Mantelfläche der Gewindesegmente gehalten sind. Diese Schraubenfedern sind konstruktionsbedingt nicht geeignet, einen Anschlag für die Führungsstifte zu bilden.

Schließlich kann aber auch vollständig auf eine Spreizfeder verzichtet werden. Die Spreizfeder hat zwar den dann nicht mehr vorhandenen Vorteil, dass sie bei Lösen des Spannkörpers die Gewindesegmente auseinanderdrückt, so dass die Gewindeeinheit und damit die ganze Mutter, insoweit sie nicht festgerostet ist, leicht vom Gewindebolzen abgezogen werden kann, jedoch kann diese Funktion auch über Führungsmittel realisiert werden, die die Bewegung der Gewindesegmente auch ohne Federkraft al-leine durch eine Führung ermöglichen. Ferner ist es natürlich möglich, selbst auf diese, die Gewindesegmente beim Lösen nach außen bewegenden Führungsmittel zu verzichten. In diesem Fall läge kein Anschlag vor, so dass die Gewindesegmente aus dem Spannkörper herausfallen könnten. Die Führung in den Spalten zwischen den Seitenflächen mit einem oberen und einem unteren Anschlag verhindert dies.

Wird die Mutter auf einen horizontalen Gewindebolzen aufgeschoben, werden die Gewindesegmente durch die spreizende, nach außen drängende Auflagekraft auseinandergedrückt. Im Falle eines vertikalen Gewindebolzens kann diesen Effekt der Benutzer erzeugen, in dem er die Mutter beim Verfahren längs des Gewindebolzens gegen die Gleitfläche drückt. Auf diese Weise kann auch ohne Spreizfeder erreicht werden, dass die Gewindesegmente einen ausreichenden Abstand zum Außengewinde des Gewindebolzens einhalten und die Mutter in der Öffnungsstellung über das Außengewinde geschoben werden kann.

Selbst wenn die Gewindesegmente auf dem Außengewinde festgebacken sein sollten, kann, wie oben erwähnt, die Mutter oft noch gelöst werden. Hierzu wird der Spann-körper nach hinten gedrückt, was, wenn auch er festgebacken sein sollte, mit einem ruckhaften Lösen nach einem Aufhebeln oder nach Hammerschlägen verbunden sein kann. Anschließend kann der Benutzer dann ein Spreizmittel, zum Beispiel einen Schraubenzieher in den Spalt zwischen den Gewindesegmenten einführen und die Gewindesegmente vom Außengewinde zum Lösen der Mutter abhebeln. Der erfindungsgemäße Sicherungsanschlag verhindert nun, dass beim Lösen des Spannkörpers die Spreizfeder nicht durch die auf der Innenseite des Spannkörpers hervorspringenden Führungsstifte beschädigt wird.

Die Seitenflächen sind bevorzugt so konturiert, dass sie im vorderen Bereich der Mutter mit zueinander parallelen Abschnitten flächig einander gegenüber liegen. Hier wird ein Spalt verbleiben, der jedoch lediglich zum Ausgleich von Fertigungstoleranzen dient, so dass die Mutter sicher durch Aufschieben des Spannkörpers geschlossen werden kann. Dieser Spalt kann daher klein bleiben, insbesondere weniger als 2 mm weiter bevorzugt nur 1 mm betragen oder noch kleiner sein. Letztlich hängt dies natürlich vom Nenndurchmesser der Mutter ab. Wichtig ist aber die Tatsache, dass der Spalt deutlich kleiner ist als der Durchmesser der Führungsstifte, damit sich ein An-schlag im vorderen Bereich ergibt.

Zwischen dem vorderen Bereich der Mutter unterhalb des oben genannten Anschlages und dem zusätzlichen Sicherungsanschlag im hinteren Bereich der Mutter befindet sich ein Abschnitt, in dem die Seitenflächen der Gewindesegmente weitgehend geradlinig sind, so dass sich ein kontinuierlicher Spalt ergibt, in dem die Führungsstifte während des Verschiebens des Spannkörpers relativ zu den Gewindesegmenten hin und her beweglich sind. Dieser Spalt kann, da die Führungsstifte in diesem Bereich weitgehend funktionslos sind, deutlich größer sein als die Dicke der Führungsstifte.

In Richtung des hinteren Bereiches der Mutter verengt sich der Spalt zwischen den gegenüberliegenden Seitenflächen der Gewindesegmente wieder. Da die Gewindesegmente nach dem Bewegen des Spannkörpers in Lösestellung mit etwa der Hälfte ihrer Länge aus dem Spannkörper herausragen, besteht das Risiko, dass sie nicht ausreichend sicher gehalten sind. Dies vermeidet die Form des Spaltes, da die Gewindesegmente über die Führungsstifte in der verbleibenden Führung durch die Kraft der Spreizfeder in flächige Anlage an der Innenseite des Spannkörpers gehalten sind.

Unter dem längs verlaufendem Bereich verengt sich der Spalt dann zwischen den Seitenflächen weiter, so dass sich der Sicherungsanschlag ergibt. Hierzu sind, sofern vorhanden, oberhalb der Spreizfeder, in der Kontur der Seitenflächen zu den gegen-überliegenden Seitenflächen hervorspringende Nasen vorgesehen, die in Öffnungs-stellung des Spannkörpers einen Abstand zueinander aufweisen, der kleiner ist als die Dicke der Führungsstifte. Da die aufzunehmenden Kräfte im Bereich des Sicherungs-anschlages nicht so groß sind wie im Bereich des vorderen Anschlages, können die Nasen hier etwas kleiner gehalten werden, um Platz für die unterhalb des Sicherungs-anschlages angeordnete Ringnut zu schaffen, in der die Spreizfeder gehalten ist.

Bevorzugt weist die Mutter zwei Gewindesegmente auf, wobei natürlich auch drei oder mehr Gewindesegmente möglich wären, die aber technisch bei den meisten Anwendungen keinen zusätzlichen Nutzen bringen. Die Gewindeeinheit setzt sich aus den umfangsmäßig zusammengesetzten Gewindesegmenten zusammen. Grundsätzlich kann ihre Außenkontur, also die Außenkontur der Gewindesegmente, jede Form auf-weisen. Als besonders vorteilhaft hat sich aber auch hier im vorderen Bereich eine sechseckige Form und im hinteren Bereich eine zylindrische Form der Gewindeeinheit erwiesen.

Bei Verwendung von zwei Gewindesegmenten mit sechseckiger Außenkontur der Gewindeeinheit weisen diese dann drei ebene Flächen auf, die über gekrümmte, linienartige Verbindungsbereiche in einander übergehen. Hierdurch ergeben sich im Bereich der Krümmung signifikante, parallel zur Anziehrichtung verlaufende, linienartige Vorsprünge, die in korrespondierenden Nuten in der Innenfläche des Spannkörpers geführt sein können. Diese Nuten bilden dann die ersten Führungsmittel, während die Vorsprünge die zweiten Führungsmittel bilden. Hierdurch ergibt sich auch gleichzeitig eine Sicherung gegen Verdrehen der Gewindeeinheit innerhalb des Spannkörpers.

Bevorzugt weisen die verwendeten Gewindesegmente die gleiche Form auf. Dies bedeutet, dass die einander gegenüberliegenden Seitenflächen der Gewindesegmente ebenfalls grundsätzlich gleich geformt sind, jedoch zueinander spiegelverkehrt angeordnet sind. Solche Gewindesegmente lassen sich, wenn die Gewindeeinheit von zwei Gewindesegmenten gebildet ist, besonders einfach herstellen, da die beiden Seitenflächen eines Gewindesegments zueinander planparallele Flächen aufweisen, die nach Einspannen des Rohlings, beispielsweise spanend, ohne Werkzeugwechsel und Positionswechsel des Rohlings hergestellt werden können. Die Gewindeabschnitte müssen sich nicht über die gesamte innere Fläche der Gewindesegmente erstrecken, wobei natürlich die verbleibenden Flächen so weit räumlich zurückspringen müssen, dass sie nicht in den Bereich des Gewindes hineinragen.

Je nachdem, für welchen Zweck die Mutter vorgesehen ist, kann die Segmentaufnahme als Durchgangsöffnung ausgebildet sein oder, wie im Falle einer Hutmutter, einseitig geschlossen sein. Soll die Mutter auf einen längeren Gewindebolzen aufgeschoben werden, um dem Benutzer das eingangs beschriebene Verdrehen der Mutter über einen längeren Gewindegang zu ersparen, muss die Segmentaufnahme natürlich eine Durchgangsöffnung sein. Ist dieser Aspekt nicht vorrangig, kann die Mutter auch ähnlich einer Hutmutter ausgebildet sein, in diesem Fall ist der Spannkörper dann auf der vorderen Seite geschlossen, wobei er, ebenfalls wie eine Hutmutter, einen mehr oder weniger langen Bereich aufweisen kann, in den ein überstehende Gewindegang des Außengewindes eintauchen kann.

Der den hervorstehenden Teil des Gewindebolzens abdeckende Teil der Mutter kann auch auf den Spannkörper oder auch den Gewindebolzen selbst aufgeschraubt sein. In diesem Fall kann der Benutzer die Mutter wahlweise als Hutmutter oder als klassische Durchsteckmutter einsetzen. Ist der Hut-Bereich auf den Gewindebolzen selbst aufgeschraubt, kann er gleichzeitig als sichernde Kontermutter verwendet werden. Ich diesem Fall ist er bevorzugt so geformt, dass er den Sicherungskörper auf die Gewindeeinheit drückt, so dass dieser hierdurch fixiert ist.

Während im Falle einer Durchgangsöffnung die Mutter bei den meisten Anwendungen wie eine Sechskantmutter angezogen werden wird und hierzu der Spannkörper eine entsprechende Sechskantkontur aufweist, kann im Falle einer Hutmutter natürlich auch jede andere Form Verwendung finden, so könnte die Oberfläche des Spannkörpers auch eine Einsenkung aufweisen, die das Ansetzen eines Inbusschlüssels oder eines vergleichbaren Werkzeugs erlaubt. Aber auch alle anderen Muttern können über die bekannten Werkzeuge oder über eigens zu diesem Zweck designte Spezialwerk-zeuge angezogen werden. Wichtig ist lediglich die Möglichkeit, das erforderliche Drehmoment aufbringen zu können.

Spreizmittel im Sinne der vorliegenden Erfindung können alle Möglichkeiten sein, die Gewindesegmente beim Lösen des Spannkörpers auseinander zu drängen. Dies sind beispielsweise Federn, insbesondere eine oder mehrere Ringfedern oder auch in den Seitenflächen, beispielsweise in kleinen Sacklöchern, angeordnete Gummi oder Spiralfedern. Spreizmittel können aber auch Führungen sein, zum Beispiel Führungsstifte, die beim Verschieben des Spannkörpers längs der Seitenflächen der Gewindesegmente diese auseinanderdrückend oder in Führungsnuten in den Gewindesegmenten gehalten bewegt werden. Die Führungsnuten können in kinematischer Umkehr auch in dem Spannkörper an seiner inneren Mantelfläche vorgesehen sein, wobei dann die Führungsstifte an den Gewindesegmenten vorgesehen sein können. Um die Spreiz-wirkung zu realisieren, können die Führungsstifte pilzkopfartige Endbereiche aufweisen, die in einer T-förmigen Führungsnut gehalten sind, so dass die Querkraft übertragen werden kann. Führungsmittel sind in erster Linie Nut-Federverbindungen, auch mit einer Pilzkopfverbindung in einer T-förmigen Nut.

### Kurze Beschreibung der Zeichnungen

Weitere Anwendungsbereiche und Vorteile der Erfindung ergeben sich der nachfolgenden Beschreibung bevorzugter Ausführungsbeispiele anhand der Zeichnungen. Es versteht sich, dass die gesamte Beschreibung und die Beschreibung spezifischer Ausführungsbeispiele nur der Veranschaulichung dienen und den Umfang der vorliegenden Erfindung nicht einschränken sollen.

In den Zeichnungen zeigt:
**Fig.1**

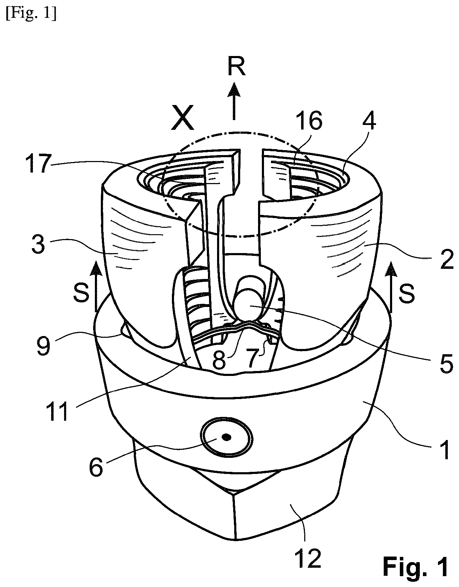

   [fig.1] eine dreidimensionale Darstellung einer erfindungsgemäßen Mutter,
**Fig.2**

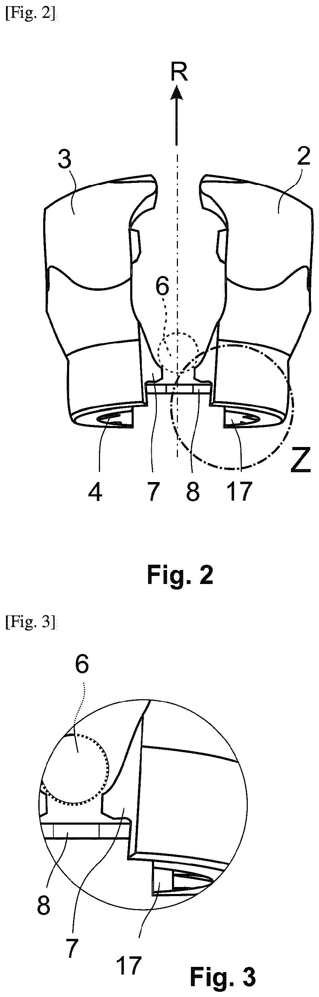

   [fig.2] die Gewindeeinheit der Mutter aus Figur 1 in einer Seitenansicht,
**Fig.3**
   [fig.3] die Einzelheit "Z" aus Figur 2,
**Fig.4**

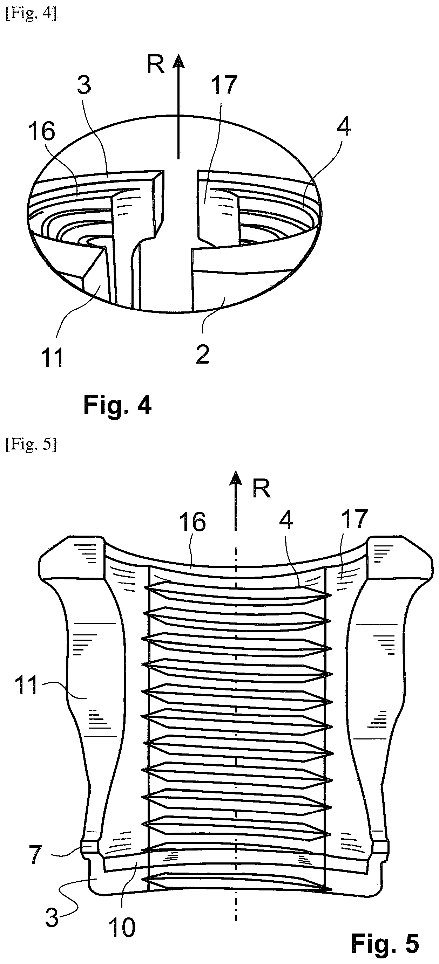

   [fig.4] die Einzelheit "X" aus Figur 1,
**Fig.5**
   [fig.5] ein Gewindesegment der in den Figuren 1 bis 4 dargestellten Mutter in einer Ansicht aus Sicht des in Einbaulage gegenüberliegenden Gewindesegments,
**Fig.6**

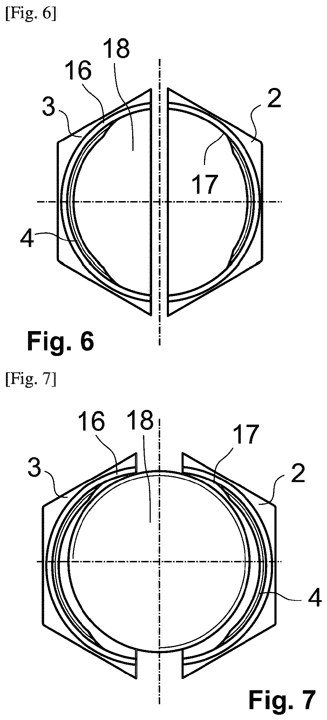

   [fig.6] einen Gewindebolzen seitlich mit gesetzten Gewindesegmenten ohne Spannkörper in Lösestellung und in einer Ansicht von oben,
**Fig.7**
   [fig.7] den Gewindebolzen mit dem Gewindesegmenten aus Figur 6 in Lösestellung der Gewindesegmente,
**Fig.8**

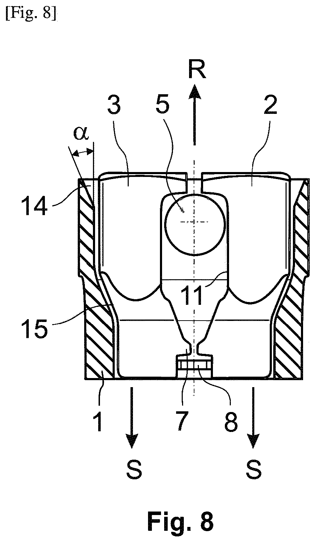

   [fig.8] eine Seitenansicht einer weiteren Ausgestaltung der Erfindung, teilweise im Schnitt in Schließstellung der Mutter,
**Fig.9**

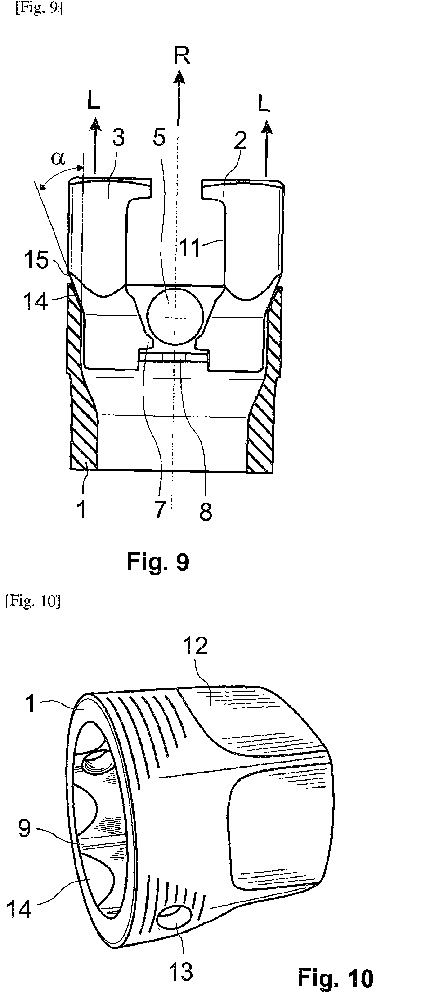

   [fig.9] die in Figur 8 dargestellte Mutter in Öffnungsstellung und
**Fig.10**
   [fig. 10] den Spannkörper der in den Figuren 8 und 9 dargestellten Ausgestaltung der Mutter in einer dreidimensionalen Darstellung.

### Beschreibung der Ausführungsarten

In Figur 1 ist eine erfindungsgemäße Mutter in einer dreidimensionalen Darstellung gezeigt. Die Mutter weist eine segmentierte Gewindeeinheit, hier mit zwei Gewindesegmenten 2,3, auf. Die Gewindesegmente 2,3 werden von einer im relativ zur Anziehrichtung R hinteren Bereich der Mutter (in der Zeichnung unten) von einer Spreizfeder 8 auseinandergedrückt bzw. in Anlage gegen die Innenfläche eines Spannkörpers 1 angestellt. Der Spannkörper 1 weist eine Durchgangsöffnung als Segmentaufnahme auf. Die Spreizfeder 8 ist bei dargestellten Ausführungsbeispiel als ringförmig entlang der inneren Mantelfläche der Segmentaufnahme des Spannkörpers 1 und damit um die Außenseite der Gewindeeinheit herum verlaufende Biegefeder (Ringfeder) ausgebildet.

In der in Figur 1 dargestellten Orientierung der Gewindesegmente 2,3 befindet das Innengewinde 4 in einem "inaktiven" Zustand, das heißt, die Gewindesegmente 2,3 sind auseinandergerückt und können mit einem Außengewinde des Gewinde- oder Nenndurchmessers der Mutter nicht zusammenwirken. Zum Überführen der Mutter in den aktiven Zustand wird der Spannkörper 1 in eine Spannrichtung S nach oben geschoben bzw. die Gewindeeinheit in den Spannkörper 1 eingedrückt. Hierdurch werden die Gewindesegmente 2,3 aufeinander zubewegt und das Innengewinde 4 erhält in Schließstellung seinen Gewinde- oder Nenndurchmesser.

Auf der Innenseite des Spannkörpers 1 sind Führungsstifte 5,6 vorgesehen, die in Spalte zwischen gegenüberliegende Seitenflächen 11 der Gewindesegmente 2,3 ragen. Diese Führungsstifte 5,6 wirken mit Anschlägen zusammen, die von den konturierten Seitenflächen 11 im vorderen und hinteren Bereich der Mutter bzw. der Gewindeeinheit gebildet werden.

Im seitlichen Bereich weisen die Gewindesegmente 2,3 Ausnehmungen als Bolzenauflage 17 auf. Diese Bolzenauflage 17 wird von zwei gegenüberliegenden Ausnehmungen mit aus Sicht des Inneren der Mutter konkav gekrümmter Oberfläche gebildet, wobei sich dieser konkave Bereich von vorne nach hinten durchgängig erstreckt. In Figur 4 ist die Einzelheit X aus Figur 1 in einer vergrößerten Darstellung wiedergegeben, in der im oberen Bereich der Gewindesegmente 2,3 die konkave Oberfläche der die Bolzenauflage 17 bildenden Ausnehmungen dargestellt ist. Die Führungsstifte 5,6 sind natürlich nur so lang, dass sie nicht in den Bereich der Ausnehmungen hineinragen und diesen Bereich frei lassen. Ansonsten könnten die Führungsstifte 5,6 ja in Kontakt mit dem Außengewinde des Gewindebolzens 18 kommen und diesen beschädigen bzw. den gewünschten Gleiteffekt zunichtemachen.

Grundsätzlich wäre es ausreichend, wenn auf einer Seite der Mutter solche Ausnehmungen vorgesehen sind, die einander gegenüberliegend jeweils an einem der Gewindesegmente 2,3 vorgesehen sind. In diesem Fall müsste der Benutzer, um den erfindungsgemäßen Nutzen der Gleitflächen zu erhalten, die Mutter in der richtigen Orientierung auf den Gewindebolzen 18 aufschieben. Dies wiederum könnte natürlich dazu führen, dass der Benutzer dies übersieht und so der erfindungsgemäße Nutzen nicht erreicht werden kann und die Mutter verhakt oder eines der Gewinde abschnittsweise beschädigt wird. Daher wird bevorzugt auf beiden Seiten der Gewindesegmente 2,3 eine erfindungsgemäße Ausnehmung zur Bildung der Bolzenauflage 17 vorgesehen sein.

Im oberen Bereich weisen die Gewindesegmente 2,3 einen Absatz 16 auf, der umlaufend ausgebildet ist. Hierdurch ergibt sich nach dem Zusammenfügen der Gewindesegmente 2,3 durch Aufschieben des Spannkörpers 1 ein um den Gewindebolzen 18 herum verlaufender, nutförmiger Spalt. Dieser kann genutzt werden, um eine definierte Anlagefläche der Mutter an der Fläche, gegen die sie angezogen wird, zu schaffen. Ein solcher Absatz 16 kann auch im hinteren Bereich der Mutter vorgesehen werden, der dann wiederum genutzt werden könnte, um eine zusätzliche Möglichkeit zum Ansetzen eines Werkzeugs für das Abhebeln der nach einer bestimmten Nutzungsdauer festgebackenen Gewindesegmente 2,3 von dem Außengewinde zu schaffen.

In Figur 2 ist die Gewindeeinheit der Mutter aus Figur 1 ohne den Spannkörper 1 dargestellt. Zu erkennen ist, dass die Seitenflächen 11 der Gewindesegmente 2,3 im oberen Bereich hervorspringende, von der Seite gesehen flache Abschnitte aufweist, die dem jeweils anderen Gewindesegment 3,2 zugewandte ebene Flächen besitzen. Der obere Bereich in der Zeichnung ist der vordere Bereich der Mutter mit dem die Mutter sich gegen die Fläche abstützt, gegen die sie in Anziehrichtung R angeschraubt wird. Bei Zusammensetzen bzw. -stellen der Gewindesegmente 2,3 zu der Gewindeeinheit liegen diese ebenen Flächen unter Belassung eines kleinen Spaltes gegenüber, wobei der Spalt kleiner als der Durchmesser der Führungsstifte 5,6 ist. Auf diese Weise ergibt sich ein vorderer Anschlag, der wirksam wird, wenn der Spannkörper 1 auf die Gewindesegmente 2,3 zum Schließen der Mutter aufgeschoben wird.

Im unteren Bereich ist ein weiterer Anschlag, nämlich der Sicherungsanschlag 7, vorgesehen. Dieser wird von zwei hervorspringenden Nasen gebildet, die sich von den Seitenflächen 11 der Gewindesegmente 2,3 in Richtung des gegenüberliegenden Gewindesegments 3,2 erstrecken. Unterhalb des Sicherungsanschlages 7 ist die Spreizfeder 8 angeordnet. Der Spalt zwischen den Gewindesegmenten 2,3 kann sich durch Verschieben der Gewindeeinheit innerhalb des Spannkörpers 1 nur so weit öffnen, dass zwischen den Nasen an der engsten Stelle ein Restspalt verbleibt, der kleiner ist als die Dicke der Führungsstifte 5,6.

Die Nasen weisen im gezeigten Ausführungsbeispiel an ihrer, der Vorderseite der Mutter und damit den Führungsstiften 5,6 zugewandten Seite eine gerundete Oberfläche auf, so dass sich eine flächige Anlage an die Außenfläche der Führungsstifte 5,6 ergibt. Auf der gegenüberliegenden Seite sind die Nasen kantig mit einer zur Anziehrichtung R rechtwinkligen Kontur ausgebildet, die sich in die Form der Aufnahmenut 10 für die Spreizfeder 8 einfügt und damit eine ebene Abstützfläche für die Spreizfeder 8 bildet. Sofern die Spreizfeder 8 keine ebene Oberfläche aufweist, sondern beispielsweise aus einem runden Federdraht gefertigt ist, kann diese Seite der Nase natürlich zur Bildung der flächigen Anlage an die Form des Querschnitts der Spreizfeder 8 angepasst sein.

In Figur 3 ist der Bereich des Sicherungsanschlages 7 mit der von der Seitenfläche 11 vorspringenden Nase des rechten Gewindesegments 2 aus Figur 2 als Einzelheit Z in einer vergrößerten Darstellung wiedergegeben. Hier ist insbesondere die Form der Nase und die Kontur der Seitenfläche 11 in diesem unteren Bereich zu erkennen. Die Nase setzt den Bereich der Aufnahmenut 10 für die ringförmige Spreizfeder 8 fort, die einen rechteckigen Querschnitt aufweist und sich somit gegebenenfalls flächig an der Nase abzustützen vermag.

Figur 5 zeigt eines der beiden Gewindesegmente 3 der Mutter aus den Figuren 1-3. Das jeweils andere Gewindesegment 2 hat die gleiche Form. Da hier nur zwei Gewindesegmente 2,3 verwendet werden, können die Teilflächen der Seitenflächen 11 auf beiden Seiten des Gewindesegments 3 in einer Ebene liegen, was die Herstellung der Gewindesegmente 2,3 deutlich vereinfacht. Zwischen den Seitenflächen 11 und den Gewindegangabschnitten des Innengewindes 4 sind zur Bildung einer Bolzenauflage 17 Ausnehmungen in Form von konkav nach außen orientierten, gekrümmten Oberflächen vorgesehen.

Im oberen Bereich des Gewindesegments (3) ist ein Absatz (16) vorgesehen, d. h. vom Schalenkörper des Gewindesegmente (3) springt ein innerer Bereich etwas unterhalb des oberen Randes nach innen, in den die Gewindegangabschnitte des Innengewindes 4 eingearbeitet sind. Dies erlaubt ein definiertes Auslaufen der Gewindegangabschnitte sowie eine definierte Anlagefläche der Mutter an die Fläche, gegen die sie angezogen wird.

Im mittleren Bereich sind die Gewindegänge des Innengewindes 4 dargestellt. Dieses Innengewinde 4 erstreckt sich hier durch die im unteren Bereich vorgesehene Aufnahmenut 10 zur Aufnahme der Spreizfeder 8, wobei die Aufnahme so tief ist, dass die Spreizfeder 8 außerhalb des Bereiches liegt, in dem der Gewindebolzen 18 mit dem Außengewinde in die Mutter geschraubt wird. Alternativ kann der untere Bereich mit der Aufnahmenut 10 und der Spreizfeder 8 auch einen größeren Durchmesser aufweisen, so dass hierüber vermieden ist, dass die Spreizfeder 8 das Gewinde 4 blockiert.

Auch die Spreizfeder 8 ist, ebenso wie die Führungsstifte 5,6, so ausgebildet, dimensioniert und positioniert, dass sie den Bereich der Ausnehmungen der Bolzenauflage 17 idealerweise nicht durchdringt bzw. zumindest bei anliegender Bolzenauflage 17 von dem Außengewinde zurückgedrückt werden kann. Bevorzugt wird aber der Kontakt zwischen Spreizfeder 8 und Außengewinde des Gewindebolzens 18 vollständig vermieden.

In den Figuren 6 und 7 ist schematisch die Funktion einer erfindungsgemäßen Mutter dargestellt. Zur besseren Sichtbarkeit wurde der Spannkörper 1 hier nicht eingezeichnet. Figur 6 zeigt den Gewindebolzen 18 mit seitlich angesetzten Gewindesegmenten 2,3. Das Innengewinde 4 findet sich im Eingriff mit dem Außengewinde des Gewindebolzens 18. zwischen den Gewindesegmente 2,3 verbleibt dabei ein Spalt, der sich (hier nicht sichtbar) nach unten zur Bildung des Führungskanals für die Führungsstifte 5,6 erweitert.

Der Bereich mit den Gewindegangabschnitte springt nach innen hervor. Im oberen Bereich sind Ausnehmungen vorgesehen, die nach Auseinanderschieben der Gewindesegmente 2,3 eine Bolzenauflage 17 bilden, ohne dass die Gewindegangabschnitte mit dem Außengewinde des Gewindebolzens 18 im Eingriff stehen. Diese Position ist in Figur 7 dargestellt. Zu erkennen ist, dass die Krümmung der Ausnehmungen zur Bildung der Bolzenauflage 17 so gewählt ist, dass im oberen Bereich zwei linienartige Berührungsbereiche entstehen. Hierdurch kann die Mutter unter Kontakt dieser linienartigen Bereiche mit dem Außengewinde über das Außengewinde geschoben werden, ohne dass die Gewindegänge zu früh miteinander in Eingriff kommen. Alternativ kann natürlich der Krümmungsradius auch so gewählt sein, dass sich eine flächige Anlage ergibt.

Im unteren Bereich der Mutter sind hier ebenfalls Ausnehmungen vorgesehen, so dass der Benutzer die Mutter immer mit dem Spalt gegen das Außengewinde drücken kann oder sie so auf ein horizontales Außengewinde legen kann, dass sich einer der für ihn optisch erkennbaren Spalte und damit die Bolzenauflage 17 im Bereich der Kontaktfläche befindet. Insbesondere aufgrund der im Wesentlichen ovalen Form des Inneren der geöffneten Mutter ist die geeignete Position erkennbar und bei auf einem horizontalen Außengewinde liegender Mutter wird sich die Mutter weitgehend selbsttätig so drehen, dass einer der beiden gegenüberliegenden Spalte an der Auflagefläche zum Liegen kommt. Hier ist es dann natürlich hilfreich, wenn an beiden Spalten zwischen den Gewindesegmenten 2,3 eine Bolzenauflage 17 vorgesehen ist, so dass es unerheblich ist, welcher der beiden Spalte oben liegt.

In Figur 8 ist eine weitere Ausgestaltung der Erfindung dargestellt. Diese unterscheidet sich von der in den Figuren 1 bis 4 dargestellten Variante dadurch, dass die Gewindesegmente 2,3 Segmentanlageflächen 15 aufweisen, die sich in der geöffneten Stellung, wenn also der Spannkörper 1 von der Gewindeeinheit nach hinten, soweit es aufgrund seiner geführten Kopplung mit der Gewindeeinheit möglich ist, abgezogen ist, auf inneren Stützflächen 14 des Spannkörpers 1 abstützen.

Figur 8 zeigt dabei die geschlossene Stellung der Mutter, während in Figur 9 die geöffnete Stellung dargestellt ist. Zu erkennen ist zunächst die Grundfunktion ähnlich der Ausführungsform ist, die in den Figuren 1 bis 4 dargestellt ist. Der schraffiert im Schnitt dargestellte Spannkörper 1 ist relativ zu der Gewindeeinheit, die auch hier von zwei identischen Gewindesegmenten 2,3 gebildet ist, um einen definierten Weg in eine Löserichtung L und eine Schließrichtung S hin und her verschiebbar. Dieser Weg wird durch die Führungsstifte 5,6 sowie in Schließrichtung S einen oberen Anschlag und in Löserichtung L den unteren Sicherungsanschlag 7 begrenzt. Auch hier ist unterhalb des Sicherungsanschlages 7 eine Ringfeder als Spreizfeder 8 vorgesehen.

Zum Öffnen der Mutter wird die Gewindeeinheit in Löserichtung L - bei der dargestellten Orientierung nach oben - geschoben bzw. gedrückt. Hierdurch wird es der Spreizfeder 8 ermöglicht, die Gewindesegmente 2,3 innerhalb des sich erweiternden Bereiches des Spannkörpers 1 nach außen zu drücken. Hierzu ist die innere Mantelfläche des Spannkörpers 1 ebenso wie die äußere Mantelfläche der Gewindeeinheit abgestuft. Durch die Bewegung der Gewindesegmente 2,3 radial nach außen und oben wird der obere Bereich der Gewindesegmente 2,3 aus dem Innenraum der Durchgangsbohrung des ringförmigen Spannkörpers 1 heraus verlagert. Damit die so geöffnete Gewindeeinheit trotz der Öffnung weiterhin möglichst formstabil bleibt, ist nun eine flächige Anlage der radial nach außen gedrückten Gewindesegmente 2,3 an den oberen Rand des Spannkörpers 1 vorgesehen.

Für die flächige Anlage ist der obere Rand der inneren Mantelfläche der Durchgangsbohrung des Spannkörpers 1 abschnittsweise nach außen abgeflacht. Diese abgeflachten Bereiche als Stützfläche 14 sind hier eben ausgebildet, wobei natürlich auch eine gekrümmte Fläche dieser Bereiche möglich ist. Wesentlich ist nur die korrespondierende Segmentanlagefläche 15, die möglichst flächig an der Stützfläche 14 anliegt.

Im gezeigten Ausführungsbeispiel weist die Gewindeeinheit nach Zusammensetzen der Gewindesegmente 2,3 zu der segmentierten Gewindeeinheit eine Sechskantform auf. Die gerundeten Kanten dieser Außenform sind in Führungsnuten 9 der Segmentaufnahme des Spannkörpers 1 geführt. Diese Führungsnuten 9 sind nicht unbedingt notwendig, sichern aber die Gewindeeinheit gegen Verdrehen und verhindern somit auch, dass die Führungsstifte 5,6 gegen die Seitenflächen 11 der Gewindesegmente 2,3 gedrückt werden können, wenn ein Drehmoment auf den Spannkörper 1 aufgebracht wird.

Figur 10 zeigt den Spannkörper 1 der Ausgestaltung nach der Figur 8 bzw. Figur 9 in einer dreidimensionalen Darstellung. Zu erkennen ist, dass der Spannkörper 1 an seiner sechseckigen Außenkontur 12, wie eine konventionelle Mutter, im vorderen Bereich eine Sechskantform aufweist, so dass ein üblicher Maul- oder Ringschlüssel ansetzbar ist. Die hier nicht sichtbare Segmentaufnahme erlaubt es, einen längeren Gewindebolzen 18 durch die Mutter hindurch zu führen. Sollte natürlich die Länge des Gewindebolzens 18 an die Höhe der Mutter angepasst sein und es nicht notwendig sein, dass der Gewindebolzen 18 im vorderen Bereich aus der Mutter heraussteht, etwa wie es im Falle einer Hutmutter der Fall ist, kann der Spannkörper 1 auch wie eine Hutmutter oben geschlossen sein.

Figur 10 veranschaulicht die Lage der Stützflächen 14 für die Segmentanlageflächen 15. In den Figuren 5 und 6 ist zu erkennen, dass die Stützflächen 14 um einen Winkel α nach außen geneigt sind. Der Winkel α liegt bevorzugt in einem Bereich zwischen 20° und 40°. Als besonders praktikabel hat sich der Bereich zwischen 25° und 35° erwiesen, wobei ein Winkel α von 28° bevorzugt wird. Werden nun die Gewindesegmente 2,3 von der in Figur 8 gezeigten Schließstellung, in der die Gewindesegmente 2,3 nach unten in Schließrichtung S bewegt sind, in die der Schließrichtung S entgegengerichtete löse Richtung L verlagert, wandern die Gewindesegmente 2,3 seitlich nach außen, bis sich der abgestufte Bereich mit den Segmentanlageflächen 15 an den Stützflächen 14 abstützt.

Der Spannkörper 1 nach Figur 10 weist als Durchgangsöffnung, die auch als Sacklöcher auf der Innenseite der Mantelfläche ausgebildet sein könnten, Stiftaufnahmen 13 zur Aufnahme der Führungsstifte 5,6 auf. Bei der hier dargestellten Ausführungsform werden die Führungsstifte 5,6 in die Stiftaufnahme 13 eingepresst, so dass sie dort fest gehalten sind. Alternativ könnten die Führungsstifte 5,6 auch in die Stiftaufnahme 13 eingeschraubt werden. Hierzu ist dann eine entsprechende Gewindepaarung an den Führungsstiften 5,6 und der Stiftaufnahme 13 vorgesehen.

Die Spreizfeder 8 drückt die Gewindesegmente 2,3 nach außen, so dass sich ein guter Halt der Gewindesegmente 2,3 ergibt, was einen qualitativ hochwertigen Eindruck erzeugt, andererseits aber auch während der Bewegung der Mutter über das Außengewinde dafür Sorge trägt, dass die Gewindesegmente 2,3 auf Abstand zum Außengewinde gehalten werden, so dass das Aufschieben der Mutter auf den Gewindebolzen 18 mit verringerter Gefahr des Verhakens der Segmente des Innengewindes 4 mit dem Außengewinde möglich wird.

Wie auch schon bei der Ausgestaltung nach den Figuren 1 bis 4 weist die Gewindeeinheit auch bei dem hier gezeigten Ausführungsbeispiel im vorderen Bereich eine äußere Form in Form eines Sechskantes auf. Dies ist zwar nicht unbedingt notwendig, hat sich aber als eine bevorzugte Variante herausgestellt. Dieser vordere Bereich geht in einen zylindrischen hinteren Bereich mit verringertem Durchmesser über. Im Übergangsbereich zwischen diesen Bereichen sind die Segmentanlageflächen 15 ausgebildet, die hier dadurch hergestellt sind, dass der konisch nach hinten und innen zulaufende Übergangsbereich flächig abgefräst wird oder die Flächen anderweitig eingeformt werden. Letzteres kann bei größeren Stückzahlen beispielsweise durch Schmieden oder Prägen erfolgen.

Die in den Figuren 5 bis 7 gezeigte Ausgestaltung weist also im Bereich des Spannkörpers 1 zwei Abstufungen auf. Eine erste Abstufung befindet sich im mittleren Bereich und bewirkt bei Verlagern der Gewindesegmente 2,3 in Schließrichtung S in Verbindung mit dem invertiert abgestuften Bereich der Gewindeeinheit das Schließen der Gewindeeinheit. Im vorderen Bereich des Spannkörpers 1 befindet sich die zweite Abstufung, die sich hier bis zum äußeren Rand erstreckt. Diese wiederum erzeugt die flächige Anlage über die Stützflächen 14 und die Segmentanlageflächen 15.

Natürlich können die beiden korrespondieren Flächen, nämlich die Stützfläche 14 und die Segmentanlagefläche 15, auch als umlaufender, schrägstehender, glatter oder gekrümmter Bogen ausgebildet sein. Letztlich ist für diesen Aspekt der Erfindung lediglich eine flächige Anlage des mittleren Bereichs der Gewindesegmente 2,3 im oberen Randbereich oder auch in einem etwas darunter gelegenen Endbereich des Spannkörpers 1 wesentlich.

Zur Sicherung der Mutter gegen unbeabsichtigtes Lösen kann der Spannkörper 1 auch einen oder mehrere Sicherungsstifte aufweisen, die in Öffnungen, beispielsweise Sacklöcher, in der Außenseite der Gewindesegmente 2,3 eingedrückt werden können. Alternativ kann die Außenseite der Gewindesegmente 2,3 auch abschnittsweise rechtwinklig zur Anziehrichtung R gestuft ausgebildet sein, so dass sich fehlende Sperrelemente, die an der Innenkontur des Spannkörpers 1 angeordnet sein können, an den Stufen abstützen können.

Diese Ausgestaltung kann so ausgebildet sein, dass das Lösen des Spannkörpers 1 von der zusammengedrückten, segmentierten Gewindeeinheit nur noch zerstörungsbehaftet möglich ist, in dem zum Beispiel beim Lösen die Sperrelemente zerstört werden. Die Sperrelemente und der gestufte Bereich können dabei auch als Kunststoffbauteil ausgebildet sein, so dass sich ein elastischer Sicherungsbereich ergibt, der aber einfach bei entsprechender Kraftaufbringung unter Zerstörung der Kunststoffteile als Opferbauteil überwunden werden kann. Die Kunststoffbauteile können dann bevorzugt auch austauschbar sein, um die Mutter nach dem Lösen wieder einsatzbereit machen zu können.

Schließlich kann der Spannkörper 1 auch auf die Gewindesegmente 2,3 in Spannrichtung S aufgeschraubt werden. Hierzu wird es meist empfehlenswert sein, zunächst die Gewindesegmente 2,3 nach der oben beschriebenen Weise oder auch anderweitig an das Außengewinde anzustellen und erst dann mit einigen Drehbewegungen den Spannkörper 1 auf die Gewindeeinheit aufzuschreiben. Auch hier können Sicherungsstifte oder die oben beschriebenen gestuften Rastmöglichkeiten für Sperrklinken von der Gewindeeinheit das unbeabsichtigte Lösen des Spannkörpers 1 von der Gewindeeinheit verhindern.

Natürlich können sowohl die Gewindeeinheit und, sofern auf diese aufgeschraubt, auch der Spannkörper 1 wie konventionelle Schrauben als aktiv gesicherte oder selbstsichernde Schraubverbindung ausgestaltet sein.

Soweit in dem vorliegenden Dokument der Begriff "etwa" verwendet wird, gibt dieser einen Toleranzbereich an, den der auf dem vorliegenden Gebiet tätige Fachmann für üblich betrachtet. Insbesondere ist unter dem Begriff "etwa" ein Toleranzbereich von bis plus oder minus 20 Prozent, bevorzugt bis plus oder minus 10 Prozent zu verstehen. Merkmale, die in Verbindung mit einem Ausführungsbespiel oder der Figurenbeschreibung beschrieben wurden, können auch unabhängig von anderen Merkmalen dieser Ausführungsbespiele oder von den in den Figuren gezeigten Merkmalen umgesetzt und Gegenstand einer eigenständigen Erfindung sein.

Es versteht sich, dass die Beschreibung und die spezifischen Beispiele nur der Veranschaulichung dienen und den Umfang der vorliegenden Erfindung nicht einschränken sollen.

### Gewerbliche Anwendbarkeit

Die Erfindung betrifft die Herstellung und Verwendung neuartiger Muttern zur Verwendung in allen Bereichen der Technik.

### Liste der Bezugszeichen

1 Spannkörper
2 Erstes Gewindesegment
3 Zweites Gewindesegment
4 Innengewinde
5 Erster Führungsstift
6 Zweiter Führungsstift
7 Sicherungsanschlag
8 Spreizfeder
9 Führungsnut
10 Aufnahmenut
11 Seitenfläche
12 Sechseckige Außenkontur
13 Stiftaufnahme
14 Stützfläche für die Segmentanlagefläche
15 Segmentanlagefläche
16 Absatz
17 Bolzenauflage
18 Gewindebolzen
α Winkel zwischen Stützfläche und der Anziehrichtung
R Anziehrichtung der Mutter
L Löserichtung des Spannkörpers
S Spannrichtung des Spannkörpers

### Patentdokumente

patcit1: WO 01/88390 A1
patcit2: GB 558 302 A
patcit3: US 5 826 847 A1

## Patentansprüche

1. Mutter zum Aufschrauben auf einen Gewindebolzen (18) in einer axialen Anziehrichtung (R) mit einem jeweils relativ zur Anziehrichtung (R) vorderen Abschnitt und einem hinteren Abschnitt und mit
- einem Spannkörper (1) mit einer zumindest einseitig offenen Segmentaufnahme, ersten Führungsmitteln und radial nach innen ragenden Führungsstiften (5, 6),
- einer in der Segmentaufnahme zumindest in Anziehrichtung (R) hin- und her beweglichen Gewindeeinheit, die zumindest zwei Gewindesegmente (2,3) mit gebogenen, Gewindegangabschnitte aufweisenden Innenseiten aufweist, wobei die Gewindesegmente (2,3) zu einem segmentierten Innengewinde (4) mit aneinander angrenzenden oder zueinander beabstandeten Gewindesegmenten (2,3) zusammenstellbar sind,
- an der Gewindeeinheit vorgesehenen zweiten Führungsmitteln, die derart mit den ersten Führungsmitteln zusammenwirken, dass die Gewindesegmente (2,3) in der Segmentaufnahme geführt sind und bei Bewegen des Spannkörpers (1) relativ zur Gewindeeinheit in Anziehrichtung (R) die gebogenen Innenseiten derart aufeinander zubewegt sind, dass die Gewindegangabschnitte das segmentierte Innengewinde (4) bilden,
wobei die Gewindesegmente (2,3) beidseitig längs der Anziehrichtung (R) verlaufende Seitenflächen (11) aufweisen und die Führungsstifte (5,6) in Spalte zwischen gegenüberliegende Seitenflächen (11) ragen und zumindest eine der Seitenflächen (11) derart konturiert ist, dass die Seitenflächen (11) im vorderen Abschnitt der Mutter einen Anschlag für die Führungsstifte (5,6) bilden, **dadurch gekennzeichnet, dass**
die Gewindesegmente zumindest an einer Seite zwischen den Gewindesegmenten (2,3) und den Seitenflächen gewindegangfreie, glatte Ausnehmungen zur Bildung einer glatten Bolzenauflage (17) aufweisen, die sich über die vom vorderen Abschnitt zum hinteren Abschnitt gesehen vollständige Länge der Gewindesegmente (2,3) erstrecken, wobei die Oberfläche der Gewindesegmente (2,3) im Bereich der Ausnehmungen so ausgebildet ist, dass die Ausnehmungen in radialer Richtung vollständig außerhalb einer zylindrischen Hüllfläche liegen, die die äußeren Bereiche der Gewindegangabschnitte des Innengewindes (4) umhüllt.

2. Mutter nach Anspruch 1, **dadurch gekennzeichnet, dass** die die Bolzenauflage (17) bildenden Ausnehmungen aus Sicht der durch die Anziehrichtung (R) verlaufenden Mittelachse eine konkav gekrümmte Oberfläche aufweisen.

3. Mutter nach Anspruch 2, **dadurch gekennzeichnet, dass** die Oberfläche einen Krümmungsradius aufweist, der zumindest so groß, bevorzugt größer als der Krümmungsradius eines Nenndurchmessers der Mutter ist.

4. Mutter nach Anspruch 2, **dadurch gekennzeichnet, dass** die Oberfläche einen Krümmungsradius aufweist, der kleiner als der Krümmungsradius eines Nenndurchmessers der Mutter ist.

5. Mutter nach einem der vorhergehenden Ansprüche, **dadurch gekennzeichnet, dass** die Oberflächen der Ausnehmungen parallel zur Anziehrichtung (R) verlaufende, schienenartige Vorsprünge als Gleitflächen zum Schieben der geöffneten Mutter über das Außengewinde des Gewindebolzens (18) aufweisen, die vollständig außerhalb einer zylindrischen Hüllfläche liegen, die die äußeren Bereiche der Gewindegangabschnitte des Innengewindes (4) umhüllt.

6. Mutter nach einem der vorhergehenden Ansprüche, **dadurch gekennzeichnet, dass** die Gewindesegmente im vorderen Bereich und/oder hinteren Bereich einen umlaufenden, radial nach außen hervorspringenden Absatz (16) aufweisen, der derart ausgebildet ist, dass sich nach Aufschrauben der zusammengesetzten Mutter zwischen dem Absatz (16) und dem Außengewinde des Gewindebolzens (18) eine Nut ergibt.

7. Mutter nach einem der vorhergehenden Ansprüche, **dadurch gekennzeichnet, dass** der vordere Bereich der Ausnehmungen angefasst oder vollständig abgeschrägt ist.

8. Mutter nach einem der vorhergehenden Ansprüche, **dadurch gekennzeichnet, dass** die Gewindesegmente (2,3) beidseitig mit Ausnehmungen versehen sind, sodass sich in Lösestellung der Gewindesegmente (2,3) an zwei gegenüberliegenden Seiten der Mutter jeweils eine Bolzenauflage (17) ergibt, die jeweils von Ausnehmungen gebildet ist, zu beiden Seiten des Spaltes, in dem die Führungsstifte (5,6) geführt sind, angeordnet sind, wobei die Führungsstifte (5,6) derart ausgebildet sind, dass sie sich vollständig außerhalb der Bolzenauflage (17) befinden.

9. Mutter, nach einem der vorhergehenden Ansprüche zum Aufschrauben auf einen Gewindebolzen (18) in einer axialen Anziehrichtung (R) mit einem jeweils relativ zur Anziehrichtung (R) vorderen Abschnitt und einem hinteren Abschnitt und mit
- einem Spannkörper (1) mit einer zumindest einseitig offenen Segmentaufnahme, ersten Führungsmitteln und radial nach innen ragenden Führungsstiften (5, 6),
- einer in der Segmentaufnahme zumindest in Anziehrichtung (R) hin- und her beweglichen Gewindeeinheit, die zumindest zwei Gewindesegmente (2,3) mit gebogenen, Gewindegangabschnitte aufweisenden Innenseiten aufweist, wo-bei die Gewindesegmente (2,3) zu einem segmentierten Innengewinde (4) mit aneinander angrenzenden oder zueinander beabstandeten Gewindesegmenten (2,3) zusammenstellbar sind,
- an der Gewindeeinheit vorgesehenen zweiten Führungsmitteln, die derart mit den ersten Führungsmitteln zusammenwirken, dass die Gewindesegmente (2,3) in der Segmentaufnahme geführt sind und bei Bewegen des Spannkörpers (1) relativ zur Gewindeeinheit in Anziehrichtung (R) die gebogenen Innenseiten derart aufeinander zubewegt sind, dass die Gewindegangabschnitte das segmentierte Innengewinde (4) bilden,
- wobei die Gewindesegmente (2,3) beidseitig längs der Anziehrichtung (R) verlaufende Seitenflächen (11) aufweisen und die Führungsstifte (5,6) in Spalte zwischen gegenüberliegende Seitenflächen (11) ragen und zumindest eine der Seitenflächen (11) derart konturiert ist, dass die Seitenflächen (11) im vorderen Abschnitt der Mutter einen Anschlag für die Führungsstifte (5,6) bilden, **dadurch gekennzeichnet, dass** zumindest eine der Seitenflächen (11) derart konturiert ist, dass die Seitenflächen (11) im hinteren Abschnitt der Mutter einen Sicherungsanschlag (7) für die Führungsstifte (5,6) bilden.

10. Mutter nach Anspruch 9, **dadurch gekennzeichnet, dass** die Gewindeeinheit zumindest eine, insbesondere im hinteren Abschnitt der angeordnete Spreizfeder (8) aufweist, die eine radiale Spreizkraft auf die Gewindesegmente (2,3) ausübt, wobei aus Sicht der Führungsstifte (5,6) der Sicherungsanschlag (7) vor der Spreizfeder (8) angeordnet ist.

11. Mutter nach einem der beiden vorhergehenden Ansprüche, **dadurch gekennzeichnet, dass** die Seitenflächen (11) zumindest eines Gewindesegments (2 der 3) im vorderen Bereich der Mutter einen ebenen Abschnitt aufweisen, der rechtwinklig zur Anziehrichtung (R) angeordnet ist und dessen glatte Oberfläche parallel zur Anziehrichtung (R) und zur benachbarten Seitenfläche (11) verläuft.

12. Mutter nach einem der Ansprüche 9 bis 11, **dadurch gekennzeichnet, dass** die gegenüberliegenden Seitenflächen (11) der Gewindesegmente (2,3) im vorderen Bereich der Mutter jeweils einen, in Richtung des benachbarten Gewindesegments (2 oder 3) hervorspringenden Abschnitt aufweisen, wobei die hervorspringenden Abschnitte gemeinsam den vorderen Anschlag für den Führungsstift (5 oder 6) bilden.

13. Mutter nach einem der Ansprüche 9 bis 12, **dadurch gekennzeichnet, dass** die gegenüberliegenden Seitenflächen (11) der Gewindesegmente (2,3) im hinteren Bereich der Mutter jeweils einen, in Richtung des benachbarten Gewindesegments (2 oder 3) hervorspringenden Abschnitt aufweisen, wobei die hervorspringenden Abschnitte jeweils gemeinsam den hinteren Sicherungsanschlag (7) für die Führungsstifte (5,6) bilden.

14. Mutter nach dem vorhergehenden Anspruch, **dadurch gekennzeichnet, dass** die Seitenflächen (11) der Gewindesegmente (2,3) die gleiche Grundform aufweisen, so dass die einander zugewandten Seitenflächen (11) jedes Gewindesegments (2, 3) zueinander gespiegelt sind und zwischen dem oberen Anschlag und dem hinteren Sicherungsanschlag (7) einen geraden Abschnitt aufweisen, der parallel zur Anziehrichtung (R) verläuft, wobei
im Bereich des oberen Anschlags bei vollständig auf die Gewindeeinheit aufgeschobenem Spannkörper (1) ein Spalt von weniger als 2mm, bevorzugt von 1 mm oder weniger verbleibt.

15. Mutter nach einem der vorhergehenden Ansprüche, **dadurch gekennzeichnet, dass** die innere Mantelfläche des Spannkörpers (1) abschnittsweise als Gleitfläche Teil der ersten Führungsmittel ist und die zweiten Führungsmittel abschnittsweise die äußere Mantelfläche der zusammengesetzten Gewindesegmente (2, 3) als Gleitfläche umfassen, wobei
das erste Gewindesegment (2) und das zweite Gewindesegment (3) an ihrer Außenseite im dem hinteren Bereich der Mutter zugewandten Endbereich von hinten nach vorne radial nach außen um einen Winkel (α) abgeschrägte Segmentanlageflächen (15) und die innere Mantelfläche des Spannkörpers (1) im dem vorderen Bereich der Mutter zugewandten Endbereich um den Winkel (α) nach außen abgeschrägte Stützflächen (14), die mit den Segmentanlageflächen (15) derart zusammenwirken, dass sich beim Verlagern der Gewindesegmente (2,3) in eine Löserichtung (L) die Segmentanlageflächen (15), gehalten von der Spreizkraft der Spreizfeder (8) auf den abgeschrägten Stützflächen (14) flächig abstützen.

## Claims

1. Nut for screwing onto a threaded bolt (18) in an axial tightening direction (R), comprising a front section and a rear section, each relative to the tightening direction (R), and comprising
- a clamping body (1) with a segment receptacle open on at least one side, first guide means, and guide pins (5, 6) projecting radially inward,
- a threaded unit movable back and forth within the segment receptacle at least in the tightening direction (R), which comprises at least two threaded segments (2, 3) with inner surfaces featuring curved threaded sections, wherein the threaded segments (2, 3) can be assembled into a segmented internal thread (4) with threaded segments (2, 3) that are adjacent to or spaced apart from one another,
- second guide means provided on the threaded unit, which interact with the first guide means in such a way that the threaded segments (2, 3) are guided in the segment receptacle and, when the clamping body (1) is moved relative to the threaded unit in the tightening direction (R), the curved inner sides are moved toward one another in such a way that the threaded sections form the segmented internal thread (4),
wherein the threaded segments (2, 3) are provided with side surfaces (11) extending along both sides in the tightening direction (R), and the guide pins (5, 6) project into the gap between opposing side surfaces (11), and at least one of the side surfaces (11) is contoured such that the side surfaces (11) in the front section of the nut form a stop for the guide pins (5, 6), **characterized in that**
the threaded segments comprise, on at least one side between the threaded segments (2, 3) and the side surfaces, smooth recesses free of threads to form a smooth bolt seat (17) that extends over the entire length of the threaded segments (2, 3) as viewed from the front section to the rear section, wherein the surface of the threaded segments (2, 3) in the region of the recesses is shaped such that the recesses lie completely outside, in the radial direction, a cylindrical envelope surface that encloses the outer regions of the threaded sections of the internal thread (4).

2. Nut as claimed in claim 1, **characterized in that** the recesses forming the bolt seat (17) have a concavely curved surface as viewed from the central axis running through the tightening direction (R).

3. Nut as claimed in claim 2, **characterized in that** the surface has a radius of curvature that is at least as large as, and preferably greater than, the radius of curvature of a nominal diameter of the nut.

4. Nut as claimed in claim 2, **characterized in that** the surface has a radius of curvature that is smaller than the radius of curvature of a nominal diameter of the nut.

5. Nut as claimed in one of the preceding claims, **characterized in that** the surfaces of the recesses feature rail-like projections running parallel to the tightening direction (R), rail-like projections as sliding surfaces for sliding the opened nut over the external thread of the threaded bolt (18), which lie completely outside a cylindrical envelope surface that encloses the outer regions of the threaded sections of the internal thread (4).

6. Nut as claimed in one of the preceding claims, **characterized in that** the threaded segments in the front region and/or rear region have a circumferential, radially outwardly projecting shoulder (16) which is designed such that, after the assembled nut is screwed on, a groove is formed between the shoulder (16) and the external thread of the threaded bolt (18).

7. Nut as claimed in one of the preceding claims, **characterized in that** the front region of the recesses is chamfered or completely beveled.

8. Nut as claimed in one of the preceding claims, **characterized in that** the threaded segments (2, 3) are provided with recesses on both sides, such that, when the threaded segments are in the loosened position (2, 3) are in the loosened position, a bolt support (17) is formed on each of two opposite sides of the nut, each of which is formed by recesses, and which are arranged on both sides of the gap in which the guide pins (5, 6) are guided, wherein the guide pins (5, 6) are designed such that they are located completely outside the bolt support (17).

9. Nut, as claimed in one of the preceding claims, for screwing onto a threaded bolt (18) in an axial tightening direction (R), comprising a front portion and a rear portion, each relative to the tightening direction (R), and comprising
- a clamping body (1) with a segment receptacle open on at least one side, first guide means, and guide pins (5, 6) projecting radially inward,
- a threaded unit movable back and forth within the segment receptacle at least in the tightening direction (R), which comprises at least two threaded segments (2, 3) with inner surfaces featuring curved threaded sections, wherein the threaded segments (2, 3) can be assembled into a segmented internal thread (4) with adjacent or spaced-apart threaded segments (2, 3),
- second guide means provided on the threaded unit, which cooperate with the first guide means such that the threaded segments (2, 3) are guided in the segment receptacle and, when the clamping body (1) is moved relative to the threaded unit in the tightening direction (R), the curved inner surfaces are moved toward one another such that the threaded sections form the segmented internal thread (4),
- wherein the threaded segments (2, 3) are provided with side surfaces (11) extending on both sides along the tightening direction (R), and the guide pins (5, 6) protrude into the gap between opposing side surfaces (11), and at least one of the side surfaces (11) is contoured such that the side surfaces (11) form a stop for the guide pins (5, 6) in the front section of the nut, **characterized in that** at least one of the side surfaces (11) is contoured such that the side surfaces (11) form a locking stop (7) for the guide pins (5, 6) in the rear section of the nut.

10. Nut as claimed in claim 9, **characterized in that** the threaded unit comprises at least one expansion spring (8) arranged in particular in the rear section, which exerts a radial expansion force on the threaded segments (2, 3), wherein, as viewed from the guide pins (5, 6), the locking stop (7) is arranged in front of the expansion spring (8).

11. Nut as claimed in one of the two preceding claims, **characterized in that** the side surfaces (11) of at least one threaded segment (2 or 3) in the front region of the nut have a flat section that is arranged perpendicular to the tightening direction (R) and whose smooth surface runs parallel to the tightening direction (R) and to the adjacent side surface (11).

12. Nut as claimed in any one of claims 9 through 11, **characterized in that** the opposing side surfaces (11) of the threaded segments (2, 3) in the front region of the nut each comprise a section projecting toward the adjacent threaded segment (2 or 3), wherein the projecting sections together form the front stop for the guide pin (5 or 6).

13. Nut as claimed in any one of claims 9 to 12, **characterized in that** the opposing side surfaces (11) of the threaded segments (2, 3) each have a section in the rear region of the nut that projects toward the adjacent threaded segment (2 or 3), wherein the projecting sections together form the rear retaining stop (7) for the guide pins (5, 6).

14. Nut of the preceding claim, **characterized in that** the side surfaces (11) of the threaded segments (2, 3) have the same basic shape, such that the side surfaces (11) of each threaded segment facing one another (2, 3) are mirror images of one another and, between the upper stop and the rear locking stop (7), have a straight section that runs parallel to the tightening direction (R), wherein
a gap of less than 2 mm, preferably 1 mm or less, remains in the area of the upper stop when the clamping body (1) is fully slid onto the threaded unit.

15. Nut as claimed in one of the preceding claims, **characterized in that** the inner surface of the clamping body (1) forms part of the first guide means as a sliding surface in certain sections, and the second guide means comprise the outer surface of the assembled threaded segments (2, 3) as a sliding surface in certain sections, wherein
the first threaded segment (2) and the second threaded segment (3) have, on their outer sides in the end region facing the rear of the nut, segment contact surfaces (15) that are radially chamfered outward from back to front by an angle (α), and the inner surface of the clamping body (1) in the end region facing the front area of the nut, which are chamfered outward by the angle (α), and which interact with the segment contact surfaces (15) in such a way that, when the threaded segments (2, 3) in a release direction (L), the segment contact surfaces (15), held by the spreading force of the spreading spring (8), bear flat against the chamfered support surfaces (14).

## Revendications

1. Écrou destiné à être vissé sur un boulon fileté (18) dans un sens de serrage axial (R), comportant une partie avant et une partie arrière par rapport au sens de serrage (R), et comportant
- un organe de serrage (1) comportant un logement de segment ouvert au moins d'un côté, des premiers moyens de guidage et des goupilles de guidage (5, 6) faisant saillie radialement vers l'intérieur,
- une unité filetée pouvant se déplacer en va-et-vient dans le logement de segment au moins dans le sens de serrage (R), qui comporte au moins deux segments filetés (2, 3) présentant des faces intérieures courbées et comportant des sections de filetage, les segments filetés (2, 3) pouvant être assemblés pour former un filetage intérieur segmenté (4) avec des segments filetés (2, 3) adjacents ou espacés les uns des autres,
- des seconds moyens de guidage prévus sur l'unité filetée, qui coopèrent avec les premiers moyens de guidage de telle sorte que les segments filetés (2, 3) sont guidés dans le logement de segments et, lors du déplacement du corps de serrage (1) par rapport à l'unité filetée dans le sens de serrage (R), les faces intérieures courbées sont rapprochées les unes des autres de telle sorte que les sections filetées forment le filetage intérieur segmenté (4),
les segments filetés (2, 3) présentant, des deux côtés, des faces latérales (11) s'étendant dans le sens de serrage (R), et les goupilles de guidage (5, 6) s'engagent dans l'espace entre les surfaces latérales opposées (11) et qu'au moins l'une des surfaces latérales (11) est profilée de telle sorte que les surfaces latérales (11) forment, dans la partie avant de l'écrou, une butée pour les goupilles de guidage (5, 6), **caractérisé en ce que**
les segments filetés comportent, sur au moins un côté entre les segments filetés (2, 3) et les surfaces latérales, des évidements lisses dépourvus de filets afin de former un siège de boulon lisse (17) qui s'étend sur toute la longueur des segments filetés (2, 3) lorsqu'on observe de la partie avant vers la partie arrière, la surface des segments filetés (2, 3) dans la zone des évidements est formée de telle sorte que les évidements se trouvent entièrement à l'extérieur, dans la direction radiale, d'une surface d'enveloppe cylindrique qui entoure les zones extérieures des sections filetées du filetage intérieur (4).

2. Écrou selon la revendication 1, **caractérisé en ce que** les évidements formant le siège de boulon (17) présentent, vus depuis l'axe central passant par la direction de serrage (R), une surface incurvée de manière concave.

3. Écrou selon la revendication 2, **caractérisé en ce que** la surface présente un rayon de courbure qui est au moins aussi grand, de préférence plus grand, que le rayon de courbure d'un diamètre nominal de l'écrou.

4. Écrou selon la revendication 2, **caractérisé en ce que** la surface présente un rayon de courbure inférieur au rayon de courbure du diamètre nominal de l'écrou.

5. Écrou selon l'une des revendications précédentes, **caractérisé en ce que** les surfaces des évidements présentent des saillies en forme de rails s'étendant parallèlement à la direction de serrage (R), qui servent de surfaces de glissement pour faire coulisser l'écrou ouvert sur le filetage extérieur du boulon fileté (18) et qui se situent entièrement à l'extérieur d'une surface d'enveloppe cylindrique qui enveloppe les zones extérieures des sections de filetage de l'intérieur fileté (4).

6. Écrou selon l'une des revendications précédentes, **caractérisé en ce que** les segments filetés présentent, dans la zone avant et/ou dans la zone arrière, un épaulement périphérique (16) qui fait saillie radialement vers l'extérieur et qui est conçu de telle sorte qu'après le vissage de l'écrou assemblé, une rainure se forme entre l'épaulement (16) et le filetage extérieur du boulon fileté (18).

7. Écrou selon l'une des revendications précédentes, **caractérisée en ce que** la partie avant des évidements est chanfreinée ou entièrement biseautée.

8. Écrou selon l'une des revendications précédentes, **caractérisé en ce que** les segments filetés (2, 3) sont pourvus d'évidements des deux côtés, de sorte que, lorsque les segments filetés (2, 3) se forme, sur deux côtés opposés de l'écrou, un appui de boulon (17) formé respectivement par des évidements, disposés de part et d'autre de la fente dans laquelle sont guidées les goupilles de guidage (5, 6), les goupilles de guidage (5, 6) étant conçues de telle sorte qu'elles se trouvent entièrement à l'extérieur de l'appui de boulon (17).

9. Écrou, selon l'une des revendications précédentes, destiné à être vissé sur un boulon fileté (18) dans un sens de serrage axial (R), comportant une partie avant et une partie arrière par rapport au sens de serrage (R), et
- un organe de serrage (1) comportant un logement de segments ouvert au moins d'un côté, des premiers moyens de guidage et des goupilles de guidage (5, 6) s'étendant radialement vers l'intérieur,
- une unité filetée pouvant se déplacer en va-et-vient dans le logement de segment au moins dans le sens de serrage (R), qui comporte au moins deux segments filetés (2, 3) présentant des faces intérieures courbées et comportant des sections de filetage, les segments filetés (2, 3) peuvent être assemblés pour former un filetage intérieur segmenté (4) avec des segments filetés (2, 3) adjacents ou espacés les uns des autres,
- des seconds moyens de guidage prévus sur l'unité filetée, qui coopèrent avec les premiers moyens de guidage de telle sorte que les segments filetés (2, 3) sont guidés dans le logement de segments et, lors du déplacement du le organe de serrage (1) par rapport à l'unité filetée dans le sens de serrage (R), les faces intérieures courbées sont rapprochées les unes des autres de telle sorte que les sections filetées forment le filetage intérieur segmenté (4),
- les segments filetés (2, 3) présentant, des deux côtés, des faces latérales (11) s'étendant dans le sens de serrage (R), et les goupilles de guidage (5, 6) s'engagent dans l'espace entre les surfaces latérales opposées (11) et au moins l'une des surfaces latérales (11) est profilée de telle sorte que les surfaces latérales (11) forment, dans la partie avant de l'écrou, une butée pour les goupilles de guidage (5, 6), **caractérisé en ce qu'**au moins l'une des surfaces latérales (11) est profilée de telle sorte que les surfaces latérales (11) forment, dans la partie arrière de l'écrou, une butée de sécurité (7) pour les goupilles de guidage (5, 6).

10. Écrou selon la revendication 9, **caractérisée en ce que** l'unité filetée comporte au moins un ressort d'écartement (8) disposé notamment dans la partie arrière, qui exerce une force d'écartement radiale sur les segments filetés (2, 3), la butée de sécurité (7) étant disposée en avant du ressort d'écartement (8) du point de vue des goupilles de guidage (5, 6).

11. Écrou selon l'une des deux revendications précédentes, **caractérisé en ce que** les faces latérales (11) d'au moins un segment fileté (2 des 3) dans la zone avant de l'écrou présentent une partie plane qui est disposée perpendiculairement à la direction de serrage (R) et dont la surface lisse s'étend parallèlement à la direction de serrage (R) et à la face latérale adjacente (11).

12. Écrou selon l'une des revendications 9 à 11, **caractérisé en ce que** les faces latérales opposées (11) des segments filetés (2, 3) dans la zone avant de l'écrou présentent chacune une partie en saillie en direction du segment fileté adjacent (2 ou 3), les parties en saillie formant ensemble la butée avant pour la goupille de guidage (5 ou 6).

13. Écrou selon l'une des revendications 9 à 12, **caractérisé en ce que** les faces latérales opposées (11) des segments filetés (2, 3) présentent chacun, dans la zone arrière de l'écrou, une partie en saillie en direction du segment fileté adjacent (2 ou 3), les parties en saillie formant ensemble la butée de sécurité arrière (7) pour les goupilles de guidage (5, 6).

14. Écrou selon la revendication précédente, **caractérisé en ce que** les faces latérales (11) des segments filetés (2, 3) présentent la même forme de base, de sorte que les faces latérales (11) de chaque segment fileté qui se font face (2, 3) sont symétriques l'une par rapport à l'autre et présentent, entre la butée supérieure et la butée de sécurité arrière (7), un tronçon droit qui s'étend parallèlement à la direction de serrage (R), un espace de moins de 2 mm, de préférence de 1 mm ou moins.

15. Écrou selon l'une des revendications précédentes, **caractérisé en ce que** la surface latérale intérieure de le organe de serrage (1) fait partie, par sections, des premiers moyens de guidage en tant que surface de glissement, et **en ce que** les seconds moyens de guidage comprennent, par sections, la surface latérale extérieure des segments filetés assemblés (2, 3) en tant que surface de glissement, dans lequel le premier segment fileté (2) et le deuxième segment fileté (3) présentent, sur leur face extérieure, dans la zone d'extrémité tournée vers la partie arrière de l'écrou, des surfaces d'appui (15) du segment chanfreinées radialement vers l'extérieur d'arrière en avant selon un angle (α), ainsi que la surface d'enveloppe intérieure du le organe de serrage (1) dans la zone d'extrémité tournée vers la partie avant de l'écrou, des surfaces d'appui (14) biseautées vers l'extérieur d'un angle (α), qui coopèrent avec les surfaces d'appui des segments (15) de telle sorte que, lors du déplacement des segments filetés (2, 3) dans une direction de desserrage (L), les surfaces d'appui des segments (15), maintenues par la force d'écartement du ressort d'écartement (8), s'appuient à plat sur les surfaces d'appui biseautées (14).
